# EUROPÄISCHE PATENTSCHRIFT

(11) **EP 3 596 445 B1**
(45) Veröffentlichungstag und Bekanntmachung des Hinweises auf die Patenterteilung: **18.02.2026**
(21) Anmeldenummer: 18714424.1
(22) Anmeldetag: 13.03.2018
(51) Int. Cl.: G01N 15/02, G01N 15/06

(54) **PARTIKELSENSOR UND VERFAHREN ZUR MESSUNG VON PARTIKELKONZENTRATIONEN**
PARTICLE SENSOR AND METHOD FOR MEASURING PARTICLE CONCENTRATIONS
CAPTEUR DE PARTICULES ET PROCÉDÉ DE MESURE DE CONCENTRATIONS DE PARTICULES

(30) Priorität: 14.03.2017 AT 502042017
(43) Veröffentlichungstag der Anmeldung: 22.01.2020
(73) Patentinhaber: Materials Center Leoben Forschung GmbH, 8700 Leoben (AT)
(72) Erfinder: MAIER, Günther, 8793 Trofaiach (AT); KRAINER, Rudolf, 9500 Villach (AT); KÖCK, Anton, 1130 Wien (AT)
(74) Vertreter: Wirnsberger & Lerchbaum Patentanwälte OG
(86) Internationale Anmeldenummer: PCT/AT2018/060064
(87) Internationale Veröffentlichungsnummer: WO 2018/165689

(56) Entgegenhaltungen:
- WO-A1-2015/006580
- WO-A1-2016/198321
- DE-A1- 102011 081 808
- GB-A- 2 319 191
- US-A- 4 656 832
- US-A1- 2004 259 267
- US-A1- 2012 324 981
- US-A1- 2013 036 793
- US-A1- 2016 017 830
- DOINA LUTIC ET AL: "Detection of Soot Using a Resistivity Sensor Device Employing Thermophoretic Particle Deposition", JOURNAL OF SENSORS, vol. 2010, 31 December 2010 (2010-12-31), US, pages 1 - 6, XP055481992, ISSN: 1687-725X, DOI: 10.1155/2010/421072

## Beschreibung

Die Erfindung betrifft eine Vorrichtung zur Messung von Partikelkonzentrationen in einer Gasphase, wobei zumindest eine Partikelsensoranordnung vorgesehen ist.

Ferner betrifft die Erfindung eine Verwendung einer solchen Vorrichtung.

Des Weiteren betrifft die Erfindung ein Verfahren zur Messung von Partikelkonzentrationen n einer Gasphase, mit einer Vorrichtung der eingangs genannten Art.

Aus dem Stand der Technik sind Vorrichtungen zum Erfassen von Partikelkonzentrationen in einer Gasphase bekannt. Bekannte Messsysteme sind beispielsweise resistive Partikelsensoren, welche eine Änderung der Leitfähigkeit messen, wenn sich Partikel an den Sensoren anlagern. Darüber hinaus sind Messsysteme bekannt, welche auf Piezokristallen basieren, wobei sich ebenfalls Partikel an den Sensoren anlagern müssen. Ferner sind optische Messsysteme bekannt, welche Lichtstreuung an Partikeln in einer Gasphase zur Bestimmung der Partikelkonzentration nutzen.

WO 2016/198321 A1 offenbart die Präambel des Anspruchs 1.

Nachteilig ist bei solchen Vorrichtungen einerseits, dass es bei einer Messung zu einer zumindest teilweisen Anlagerung von Partikeln kommt, was eine Regeneration der Partikelsensoren aufwändig macht bzw. eine Lebensdauer der Partikelsensoren verkürzt. Andererseits kann ein aufwändiger und teurer Aufbau, wie beispielsweise ein optisches System mit Lichtquelle, notwendig sein. Häufig ist auch der Einfluss von größeren Partikeln auf das Messergebnis im Vergleich zu kleineren Partikeln hoch.

Aufgabe der Erfindung ist es daher, einen kompakten, in der Herstellung kostengünstigen sowie annähernd wartungsfreien Partikelsensor zur sensitiven und zuverlässigen Messung von zumindest einer Partikelkonzentration bereitzustellen, bei welchem ein Reinigungs- oder Regenerationsaufwand reduziert ist.

Ein weiteres Ziel der Erfindung ist es, eine Verwendung für eine erfindungsgemäße Vorrichtung anzugeben.

Eine weitere Aufgabe der Erfindung ist es, ein sensitives, zuverlässiges Verfahren zur Messung von zumindest einer Partikelkonzentration anzugeben, mit welchem ein Reinigungsaufwand des dabei verwendeten Partikelsensors minimiert wird.

Gemäß der vorliegenden Erfindung wirden eine Vorrichtung zur Messung von Partikelkonzentrationen in einer Gasphase nach Anspruch 1, eine Verwendung dieser Vorrichtung nach Anspruch 10 und ein Verfahren zur Messung von Partikelkonzentrationen in einer Gasphase mit dieser Vorrichtung nach Anspruch 11 bereitgestellt.

Die Aufgabe wird erfindungsgemäß dadurch gelöst, dass bei einer Vorrichtung der eingangs genannten Art ein Strömungskanal vorgesehen ist, durch den die Gasphase führbar ist, wobei die Partikelsensoranordnung zumindest einen Sensor aufweist, der zur Messung einer durch den Strömungskanal strömenden Gasphase positioniert ist. Die Gasphase kann hierbei Partikel, beispielsweise Feinstaub (z.B. PM₁₀, PM_{2.5}), Ultrafeinstaub, etc. tragen.

Ein mit der erfindungsgemäßen Vorrichtung erzielter Vorteil ist insbesondere darin zu sehen, dass durch den Strömungskanal eine Partikel tragende Gasphase direkt an der Partikelsensoranordnung vorbeigeführt werden kann. Dadurch ist ein kompakter, insbesondere miniaturisierter Aufbau ermöglicht und die Vorrichtung muss nicht, kann allerdings als Teil eines größeren Strömungssystems ausgebildet sein.

Es ist vorgesehen, dass zumindest eine Partikelsensoranordnung im Bereich des Strömungskanals, im und/oder am Strömungskanal positioniert ist. Besonders bevorzugt ist die Partikelsensoranordnung innenseitig am Strömungskanal positioniert. Dadurch ist bei einer sehr kompakten Bauweise gewährleistet, dass eine Partikel tragende Gasphase zwangsläufig an der Partikelsensoranordnung vorbeiströmt. Alternativ dazu kann die Partikelsensoranordnung anschließend an ein Ende des Strömungskanals positioniert sein.

Sensoren von der zumindest einer Partikelsensoranordnung sind als Heizelemente mit zumindest einem Temperatursensor, vorzugsweise mit jeweils einem Temperatursensor, ausgebildet .

Bevorzugt ist der Temperatursensor direkt im Heizelement integriert. Dadurch ist gewährleistet, dass Heizelemente auf eine bestimmte Temperatur bringbar sind, eine Änderung der Temperatur des Heizelementes messbar ist und/oder die Temperatur des Heizelementes konstant gehalten werden kann. Vorteilhaft ist es auch, wenn die Temperatur jedes einzelnen Heizelementes getrennt messbar ist und hierfür entsprechende Mittel vorgesehen sind. Die Heizelemente einer Partikelsensoranordnung können in der Größe variieren und beispielsweise als Mikroheizplatten oder Nanoheizelemente, wie etwa Nanodrähte, ausgebildet sein. Der Temperatursensor kann beispielsweise als Thermocouple bzw. Thermoelement, Diode, etc. ausgebildet sein.

Es kann vorteilhaft sein, wenn Sensoren von zumindest einer Partikelsensoranordnung jeweils zumindest einen Nanodraht aufweisen. Nanodrähte können beispielsweise durch auftreffende Partikel in Schwingung versetzt werden, welche im Weiteren, beispielsweise unter Ausnützung eines piezoelektrischen Effektes, messbar ist. Alternativ dazu kann auch eine elektrische Leitfähigkeit des Nanodrahtes messbar sein.

Um Partikelkonzentrationen in Abhängigkeit der Partikelgröße zu messen, ist es vorteilhaft, wenn Sensoren der Partikelsensoranordnung als Array, bevorzugt als lineares Array angeordnet sind, wobei die Sensoren vorzugsweise auf einem Chip angeordnet sind. Dabei können zum einen die Sensoren in einer Reihe und zum anderen mehrere solcher Reihen, beispielsweise parallel, angeordnet sein. Durch eine Anordnung der Sensoren auf einem Chip wird eine besonders kompakte, insbesondere miniaturisierte Bauweise ermöglicht.

Um ein Fluid, beispielsweise eine Gasphase, durch den Strömungskanal zu führen, ist es vorteilhaft, wenn zumindest ein Fluidbeschleunigungsmittel vorgesehen ist. Das zumindest eine Fluidbeschleunigungsmittel kann beispielsweise vor und/oder nach dem Strömungskanal angeordnet sein. Alternativ dazu kann das zumindest eine Fluidbeschleunigungsmittel im und/oder am Strömungskanal positioniert sein. Ein Fluidbeschleunigungsmittel kann beispielweise ein Gebläse, ein Ventilator oder Ähnliches sein.

Besonders bevorzugt ist das zumindest eine Fluidbeschleunigungsmittel als Heizeinrichtung ausgebildet, wobei die Heizeinrichtung zumindest ein Heizelement und vorzugsweise einen Temperatursensor, aufweist, wobei das zumindest eine Heizelement vorzugsweise auf einem Chip angeordnet ist. Dabei kann beispielsweise die Heizeinrichtung die Gasphase im Strömungskanal aufheizen, insbesondere deren Gasteilchen und/oder Gasmoleküle beschleunigen, wodurch thermische Konvektion entsteht und die Gasphase, einem Kamineffekt folgend, durch den Strömungskanal strömt. Ein Temperatursensor kann vorgesehen sein, um das oder die Heizelemente auf konstanter Temperatur zu halten, wobei eine dafür benötigte Heizleistung gemessen werden kann, oder, bei konstanter Heizleistung, eine Temperaturänderung des oder der Heizelemente zu messen. Alternativ kann auch eine gezielte Änderung der Temperatur, beispielsweise eine Temperaturrampe, generiert werden, wobei die dafür benötigte Leistung gemessen werden kann. Hierfür kann grundsätzlich ein beliebiger Anstieg der Leistung, beispielsweise ein stetiger, ein stufenweiser oder ein sägezahnförmiger Anstieg, erzeugt werden. Besonders bevorzugt ist für jedes Heizelement jeweils ein Temperatursensor vorgesehen. Durch eine Anordnung der Heizelemente auf einem Chip kann die Heizeinrichtung besonders kompakt, insbesondere miniaturisiert ausgebildet sein. Die Heizeinrichtung kann beispielsweise ähnlich bzw. gleich wie die Partikelsensoranordnung ausgebildet sein, wobei bei der Heizeinrichtung eine höhere Betriebstemperatur vorgesehen ist. Heizelemente können hierbei beispielsweise als Mikroheizplatten ausgebildet sein.

Zumindest eine Ablenkeinrichtung ist vorgesehen, wobei die zumindest eine Ablenkeinrichtung im Bereich des Strömungskanals, im und/oder am Strömungskanal positioniert ist. Eine solche Ablenkeinrichtung ist vorgesehen, um die Gasphase und/oder Partikel in der Gasphase auf die Partikelsensoranordnung zu lenken. Eine Ablenkeinrichtung kann beispielsweise als Führungselement, wie etwa eine schräg im Strömungskanal angeordnete Platte, ausgebildet sein. Alternativ oder zusätzlich dazu kann auch eine Einrichtung zur Erzeugung eines elektrostatischen Feldes zur Ablenkung von Partikeln vorgesehen sein.

Zumindest eine Ablenkeinrichtung ist zumindest einer Partikelsensoranordnung gegenüberliegend positioniert, wodurch die Gasphase und/oder Partikel in der Gasphase in einer einfachen Art und Weise auf die Partikelsensoranordnung lenkbar ist. Eine solche Ablenkeinrichtung ist als Heizeinrichtung ausgebildet. Dadurch kann im Strömungskanal ein Temperaturgradient entstehen, wobei die Partikel in der Gasphase mittels Thermophorese auf die Partikelsensoranordnung abgelenkt werden.

Um eine Strömungsgeschwindigkeit nicht abzubremsen, ist es vorteilhaft, wenn eine erste Öffnung des Strömungskanals eine zumindest gleich große, insbesondere größere Querschnittsfläche aufweist als eine zweite Öffnung. Es kann beispielsweise vorgesehen sein, dass ein Strömungskanal in Strömungsrichtung kontinuierlich und/oder stufenweise verjüngend ausgebildet ist. Eine Strömungsrichtung ist hierbei von der ersten Öffnung zur zweiten Öffnung definiert, wobei ein Einströmen der Gasphase durch die erste und ein Ausströmen der Gasphase durch die zweite Öffnung erfolgt. Die Partikel werden dabei von der Gasphase mitgeführt.

Um eine Ablagerung von Partikeln zu verhindern, kann vorgesehen sein, dass die zumindest eine Partikelsensoranordnung zumindest teilweise eine Beschichtung, beispielsweise eine Antihaftbeschichtung, aufweist. Darüber hinaus können auch der Strömungskanal und/oder die Heizeinrichtung eine Antihaftbeschichtung aufweisen. Es kann vorteilhaft sein, wenn die Haftwirkung einer solchen Beschichtung temperaturabhängig ist. Zur Messung kann dementsprechend die Beschichtung auf eine Temperatur gebracht werden, bei welcher eine Haftwirkung erhöht ist und Partikel an der Partikelsensoranordnung haften. Zur Regeneration kann die Beschichtung auf eine andere Temperatur gebracht werden, bei welcher eine Haftwirkung erniedrigt ist und sich Partikel von der Partikelsensoranordnung ablösen. Im zweiten Fall dient die Beschichtung als Antihaftbeschichtung. Um elektrophoretische Effekte zu vermeiden, kann die Beschichtung auch als eine anti-elektrostatische Beschichtung ausgebildet sein. Eine solche Beschichtung kann auch zusätzlich zu einer anderen Beschichtung vorgesehen sein. Die Temperatur kann beispielsweise mit Heizelementen bzw. mit zumindest einer Kühleinrichtung, beispielsweise einem Peltier-Element, eingestellt werden. Um eine kontinuierliche Messung zu gewährleisten, kann auch vorgesehen sein, dass bei mehreren Sensoren beispielsweise Sensorpaare vorgesehen sind, wobei jeweils ein Sensor regeneriert wird und ein Sensor in einem Messbetrieb ist. Alternativ können auch zwei Partikelsensoranordnungen vorgesehen sein, wobei jeweils eine Partikelsensoranordnung regeneriert wird, während die Andere im Messbetrieb ist.

Zumindest eine Steuerungseinheit zur Steuerung der Heizelemente ist vorgesehen. Dadurch können Heizelemente der Heizeinrichtung und/oder der Partikelsensoranordnung auf konstanter Temperatur gehalten und/oder mit konstanter Leistung betrieben werden. Eine Wärmeabgabe an eine Umgebung ist hierbei abhängig von der Partikelkonzentration, weshalb bei Betrieb mit konstanter Leistung eine Änderung der Temperatur der Heizelemente von der Partikelkonzentration abhängt. Die Steuerungseinheit kann zudem eine Auslese- und/oder Auswerteeinheit umfassen bzw. mit einer Auslese- und/oder Auswerteeinheit in Verbindung stehen, um auf Messergebnisse reagieren zu können bzw. eine Heizleistung dementsprechend anzupassen.

Das weitere Ziel der Erfindung wird bei einer Verwendung einer erfindungsgemäßen Vorrichtung zur Messung von Partikelkonzentrationen in einer Gasphase erreicht.

Das weitere Ziel der Erfindung wird bei einem Verfahren der eingangs genannten Art dadurch gelöst, dass die, Partikel tragende, Gasphase durch einen Strömungskanal geführt wird, wobei die Partikel in der Gasphase, zumindest teilweise, insbesondere gezielt auf zumindest eine Partikelsensoranordnung mit zumindest einem Sensor geführt werden und zumindest eine Änderung von zumindest einer Temperatur und vorzugsweise eine Schwingung mittels des zumindest einen Sensors gemessen wird. Eine Messung kann hierbei auf verschiedenen Messprinzipien, wie beispielsweise auf einer Surface Acoustic Wave Messung (SAW) oder auf einem Film Bulk Wave Resonator (FBAR), beruhen. Alternativ kann die Messung als kapazitive oder elektrostatische Messung erfolgen. Eine weitere Möglichkeit der Messung einer physikalischen Größe besteht in der Ausnützung eines piezoelektrischen Effektes.

Ein mit dem erfindungsgemäßen Verfahren erzielter Vorteil ist insbesondere darin zu sehen, dass es zu keiner Ablagerung von Partikeln an dem zumindest einen Sensor oder anderen Teilen einer zur Messung verwendeten Vorrichtung kommt.

Es ist vorteilhaft, wenn der zumindest eine Sensor der zumindest einen Partikelsensoranordnung auf eine geringere Temperatur als 200 °C, insbesondere auf eine Temperatur zwischen 50 °C und 150 °C, besonders bevorzugt auf etwa 100 °C erwärmt werden.

Der zumindest eine Sensor der Partikelsensoranordnung wird mit zumindest zeitweise konstanter Leistung beheizt oder geheizt. Dadurch ist es möglich, dass sich eine Sensortemperatur bzw. eine Temperatur der Heizelemente der Partikelsensoranordnung in Abhängigkeit der Partikelkonzentration ändert. Treffen beispielsweise Partikel auf einen Sensor auf, so kühlt dieser ab, da eine Heizleistung konstant bleibt, während Wärme auf die Partikel abgeführt wird. Eine derartige Änderung der Temperatur kann gemessen werden. Aus der Änderung der Temperatur kann die Partikelkonzentration ermittelt werden. Bei einem gepulsten Betrieb bzw. einem Betrieb mit zumindest zeitweise konstanter Leistung kann beispielsweise ein Heizelement für einen bestimmten Zeitraum mit einer konstanten Leistung geheizt werden, bzw. in Intervallen geheizt werden. Alternativ kann das Heizelement auch mit stufenförmigem Leistungsanstieg geheizt werden, wobei auf jeweils einer Stufe die Leistung konstant gehalten wird.

Um eine Thermophorese bzw. Thermodiffusion der Partikel zu verursachen, ist es vorteilhaft, wenn zumindest eine Heizeinrichtung auf eine höhere Temperatur als die zumindest eine Partikelsensoranordnung, beispielsweise auf zumindest 200 °C, insbesondere auf eine Temperatur im Bereich von 230 °C bis 400 °C, vorzugsweise auf eine Temperatur im Bereich von 250 °C bis 350 °C, besonders bevorzugt auf etwa 300 °C gebracht wird. Wenn die Heizeinrichtung eine höhere Temperatur als die Partikelsensoranordnung aufweist, so verläuft ein Temperaturgradient von der Heizeinrichtung zur Partikelsensoranordnung, wobei ein thermophoretischer Effekt entlang dieses Temperaturgradienten entsteht und dabei Partikel in der Gasphase in Richtung der Partikelsensoranordnung ablenkt.

Um Partikelkonzentrationen größenabhängig messen zu können, ist es vorteilhaft, wenn Signale einer Mehrzahl von Sensoren getrennt voneinander ausgelesen werden. So können beispielsweise Temperaturen der einzelnen Sensoren bzw. Heizelemente ausgelesen und analysiert werden. Dementsprechend kann eine Partikelkonzentration für jeden einzelnen Sensor und in weiterer Folge eine Konzentration der Partikel in der Gasphase in Abhängigkeit der Größe der Partikel in der Gasphase bestimmt werden.

Um abgelagerte Partikel von der Partikelsensoranordnung zu entfernen, ist es vorteilhaft, wenn zur Reinigung der Partikelsensoren Heizelemente der Partikelsensoren auf zumindest 200 °C, insbesondere auf eine Temperatur im Bereich von 250 °C bis 400 °C, besonders bevorzugt auf 300 °C gebracht werden. Wenn hierbei die Heizeinrichtung nicht in Betrieb ist oder auf eine geringere Temperatur als 200 °C gebracht wird, so erfolgt eine Umkehrung des thermophoretischen Effekts, wodurch Partikel von der Partikelsensoranordnung weggeführt werden. Alternativ dazu können hohe Temperaturen auf der Partikelsensoranordnung eingestellt werden, um Partikel von der Sensoroberfläche abzulösen bzw. um Partikel zu verbrennen. Darüber hinaus kann eine Einrichtung zur Sensorkühlung, beispielsweise ein Peltier-Element, vorgesehen sein. Die Erfindung wird im Weiteren detaillierter erläutert. In den Zeichnungen, auf welche dabei Bezug genommen wird, zeigen:
Fig. 1a einen Querschnitt einer erfindungsgemäßen Vorrichtung;
Fig. 1b einen Querschnitt einer alternativen Ausführung;
Fig. 1c eine weitere alternative Ausführung einer Vorrichtung;
Fig. 2 eine schematische Darstellung eines Strömungskanals;
Fig. 3a eine schematische Darstellung eines Heizelementes;
Fig. 3b eine weitere Ausführungsform eines Heizelementes;
Fig. 3c eine weitere Ausführungsform eines Heizelementes;
Fig. 3d eine querschnittliche Darstellung eines Heizelementes;
Fig. 4 eine Fotografie eines Chips;
Fig. 5 eine schematische Darstellung möglicher Modi einer Leistungsänderung.

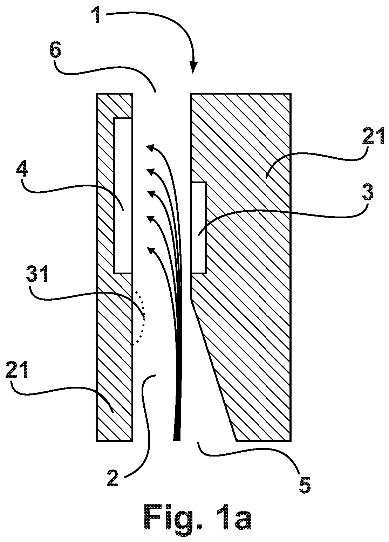

Fig. 1a zeigt einen Querschnitt durch eine erfindungsgemäße Vorrichtung 1. Die Vorrichtung 1 umfasst einen Strömungskanal 2, eine Heizeinrichtung 3 sowie eine Partikelsensoranordnung 4, wobei zumindest ein Element 21 einen Strömungskanal ausbildet. Darüber hinaus zeigt Fig.1a eine Ablenkeinrichtung, welche gestrichelt dargestellt ist und beispielsweise als Erhebung 31 ausgebildet sein kann. Eine solche Ablenkeinrichtung kann, je nach Art und/oder Funktionsweise, an verschiedenen Positionen im Strömungskanal 2 angeordnet sein. Eine Funktionsweise der Ablenkeinrichtung kann beispielsweise mechanisch sein, indem eine Erhebung 31, eine Vertiefung und/oder eine Ablenkplatte vorgesehen ist, welche eine Strömung der Gasphase ablenkt. Nach der beanspruchten Erfindung beruht die Funktionsweise der Ablenkeinrichtung auf einem thermophoretischen Effekt. Hierfür dient die Heizeinrichtung 3 als Ablenkeinrichtung. In dieser Ausführungsform weist eine erste Öffnung 5 eine größere Querschnittsfläche als eine zweite Öffnung 6 auf. Die beiden Öffnungen 5, 6 weisen hierbei eine rechteckförmige Querschnittsfläche auf. Eine Seitenlänge, insbesondere eine kürzere Seitenlänge der ersten Öffnung 5 kann grundsätzlich beliebig, bevorzugt kleiner als 20 mm, insbesondere 3 mm bis 5 mm, ausgebildet sein. Eine Seitenlänge, insbesondere eine kürzere Seitenlänge der zweiten Öffnung 6 des Strömungskanals 2, kann grundsätzlich beliebig, bevorzugt kleiner als 10 mm, insbesondere 1 mm bis 2 mm, ausgebildet sein. Bei einer runden Form der Öffnungen 5, 6 entspricht diese Seitenlänge jeweils dem Durchmesser der Öffnungen 5, 6. Durch die erste Öffnung 5 kann eine Gasphase, beispielsweise eine Partikel tragende Umgebungsluft, in den Strömungskanal 2 eintreten. Dafür kann vorgesehen sein, dass die erste Öffnung 5 über ein Strömungsleitsystem, beispielsweise Rohre und/oder Schläuche, mit einer Umgebung verbunden ist, wodurch die Gasphase aus der Umgebung, beispielsweise seitlich und/oder von oben, nachgeführt bzw. angesaugt werden kann. Die Gasphase kann im weiteren Verlauf, an einem anderen Ende des Strömungskanals 2, durch die zweite Öffnung 6 wieder aus dem Strömungskanal 2 austreten. Eine Strömungsrichtung verläuft im Allgemeinen von der ersten Öffnung 5 zur zweiten Öffnung 6. Die Strömungsrichtung ist vorzugsweise vertikal, kann allerdings auch horizontal sein, insbesondere wenn der Strömungskanal 2 Teil eines größeren Strömungssystems ist. Eine Höhe des Strömungskanals 2 kann grundsätzlich beliebig, bevorzugt kleiner als 50 mm, insbesondere 10 mm bis 25 mm sein.

Im Bereich der Heizeinrichtung 3 entsteht zwischen Heizeinrichtung 3 und Partikelsensoranordnung 4 ein Temperaturgradient, wodurch die Partikel in der Gasphase einem thermophoretischen Effekt unterliegen. Dadurch wirkt die Heizeinrichtung 3 als Ablenkeinrichtung für die Partikel. Eine Bewegung der Partikel in der Gasphase ist in Fig. 1a durch Pfeile angedeutet, wobei Partikel mit großem Durchmesser im Wesentlichen einem kurzen Pfeil folgen, während Partikel mit kleinem Durchmesser im Wesentlichen einem langen Pfeil folgen. Eine Länge der Pfeile steht dementsprechend in Relation zum Durchmesser der Partikel. Der mittlere Durchmesser der Partikel liegt typischerweise zwischen 0,1 µm und 5 µm. Eine Thermophorese lenkt demnach große Partikel stärker ab als kleine Partikel. Dadurch kommt es zu einer Größenaufteilung der Partikel in Strömungsrichtung, weshalb in einer solchen Vorrichtung 1 die Partikelkonzentrationen größenabhängig gemessen werden können. Dafür ist es vorteilhaft, wenn die Partikelsensoranordnung 4 als lineares Array ausgebildet ist, wobei die einzelnen Sensoren entlang der Strömungsrichtung angeordnet sind. Hierbei ist es zweckmäßig, wenn die Sensoren in einer Reihe angeordnet sind, wobei mehrere Reihen nebeneinander angeordnet sein können. Dementsprechend werden größere Partikel auf Sensoren, welche näher zur ersten Öffnung 5 positioniert sind und kleinere Partikel auf Sensoren, welche von der ersten Öffnung 5 weiter entfernt und näher zur zweiten Öffnung 6 sind, gelenkt.

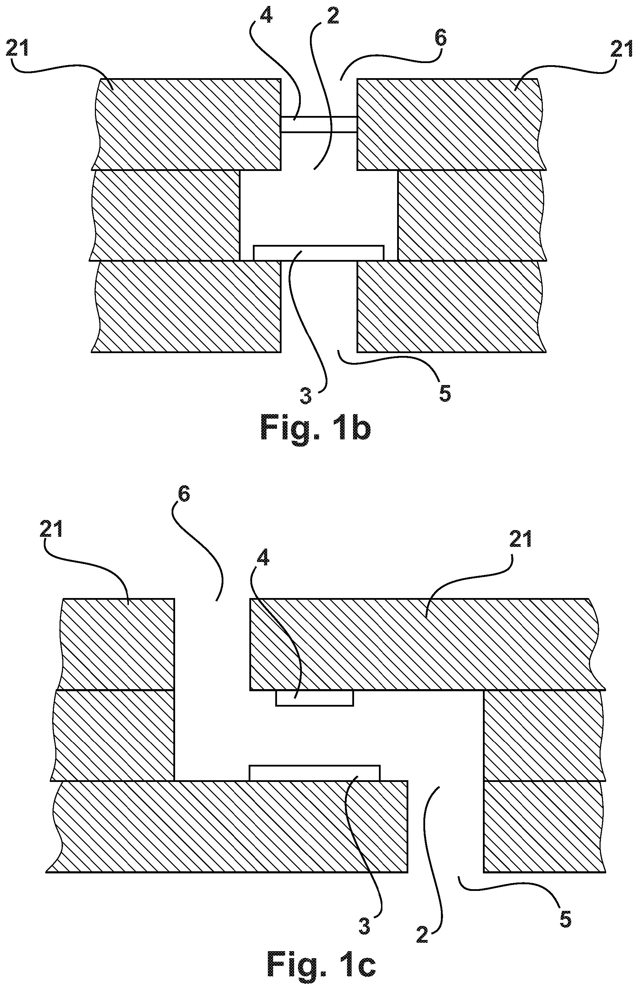

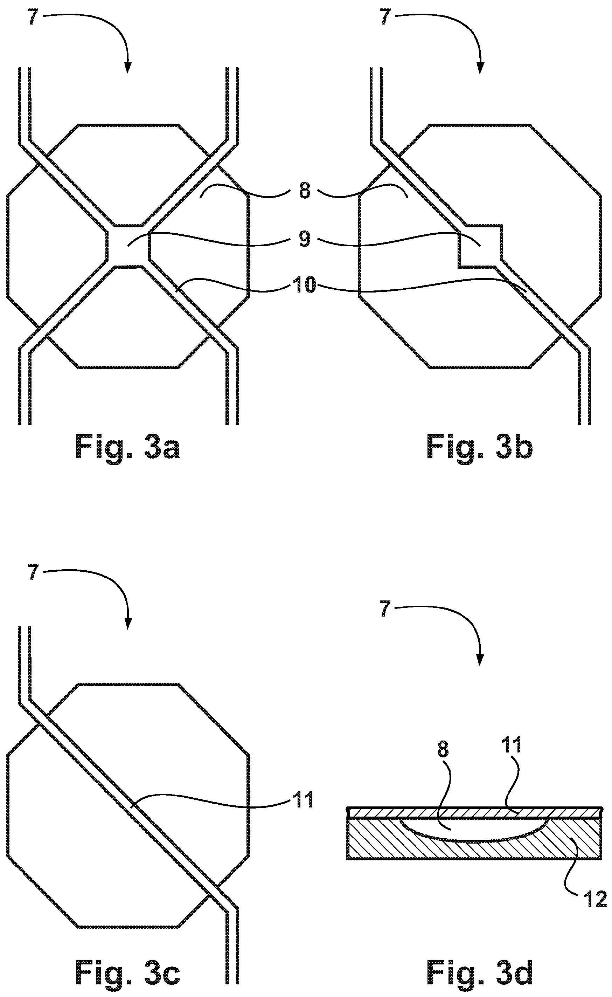

Bei einer in Fig. 1b gezeigten Ausführungsform ist der Strömungskanal 2 als Silicium-Durchkontaktierung (Through-Silicon-Via) ausgebildet. Mit einem derartigen Ansatz, bei dem mehrere Substrate, vorzugsweise Silicium-Wafer, übereinander gestapelt werden, kann eine Vorrichtung 1 auf Wafer-Scale bereitgestellt werden. Hierbei kann der Strömungskanal 2 einen Durchmesser im Submillimeterbereich, beispielsweise zwischen 10 µm und 250 µm, insbesondere etwa 80 µm aufweisen. Bei einer solchen Vorrichtung 1 auf Wafer-Scale ist eine Höhe des Strömungskanals 2 deutlich reduziert; beispielsweise liegt die Höhe in der Größenordnung eines Silicium-Wafers, wie etwa 1 mm oder weniger. In diesem Ausführungsbeispiel sind die Querschnittsflächen der ersten Öffnung 5 und der zweiten Öffnung 6 im Wesentlichen gleich groß. Zur Herstellung eines solchen Strömungskanals 2 können Silicium-Durchkontaktierungen in zumindest eine Lage von Silicium geätzt werden. Darüber hinaus können mehrere Lagen von Silicium übereinander gestapelt sein, um einen längeren Strömungskanal 2 auszubilden. Ferner sind eine Heizeinrichtung 3 sowie eine Partikelsensoranordnung 4 vorgesehen, welche ebenfalls auf bzw. an einer Lage von Silicium aufgebracht bzw. angebracht sein können. Die Heizeinrichtung 3 und die Partikelsensoranordnung 4 sind in Größe und Form derart ausgebildet, dass diese von einer Gasphase im Strömungskanal 2 umströmt werden können. Die Heizeinrichtung 3 und die Partikelsensoranordnung 4 können hierfür beispielsweise Heizplatten 7 oder Balken **11** wie diese in Fig. 3a bis c gezeigt sind umfassen. In dem in Fig. 1b gezeigten Ausführungsbeispiel verläuft der Temperaturgradient zwischen Heizeinrichtung 3 und Partikelsensoranordnung 4 von unten nach oben entlang der Strömungsrichtung der Gasphase, weshalb eine Auftrennung der Partikel nach Größe nicht erfolgen kann.

Bei einer in Fig. 1c gezeigten Ausführungsform umfasst der Strömungskanal 2 ebenfalls Silicium-Durchkontaktierungen, insbesondere Silicium-Durchkontaktierungen von unterschiedlichem Durchmesser. Hierbei umfasst der Strömungskanal 2 drei Abschnitte, wobei ein erster Abschnitt mit dem dritten Abschnitt durch den zweiten Abschnitt verbunden ist. Der erste und der dritte Abschnitt sind im Wesentlichen gleich ausgebildet und weisen etwa den gleichen Durchmesser auf. Die Silicium-Durchkontaktierungen des ersten und dritten Abschnitts sind allerdings versetzt zueinander positioniert. Die Strömungsrichtung verläuft in diesen Abschnitten vertikal. Der zweite Abschnitt umfasst eine Silicium-Durchkontaktierung mit größerem Durchmesser. Die Strömungsrichtung verläuft in diesem Abschnitt horizontal. Die Heizeinrichtung 3 sowie die Partikelsensoranordnung 4 sind hierbei im zweiten Abschnitt, einander gegenüberliegend und waagrecht positioniert. Der Temperaturgradient verläuft hier im Wesentlichen senkrecht zur Strömungsrichtung, weshalb eine Größenauftrennung der Partikel erfolgen kann.

Um eine Größenauftrennung mittels Thermophorese zu ermöglichen, ist es im Allgemeinen notwendig, dass die Heizeinrichtung 3 und die Partikelsensoranordnung 4 an unterschiedlichen Seitenflächen des Strömungskanals 2, vorzugsweise an gegenüberliegenden Seitenflächen des Strömungskanals 2, insbesondere einander annähernd gegenüber positioniert sind. Darüber hinaus ist es vorteilhaft, wenn der Temperaturgradient die Strömungsrichtung kreuzt, wenn also der Temperaturgradient und die Strömungsrichtung nicht parallel verlaufen. Besonders bevorzugt verläuft der Temperaturgradient etwa senkrecht zur Strömungsrichtung. Die hier beschriebene Ausführungsform stellt eine Minimalkonfiguration zur Größenauftrennung dar. Natürlich kann eine Vorrichtung 1 eine beliebige Kombination aus zumindest einer Heizeinrichtung 3 und zumindest einer Partikelsensoranordnung 4 umfassen.

Im Übrigen können die in Fig. 1a bis c gezeigten Ausführungsformen beliebig orientiert sein bzw. gedreht werden, wodurch eine Strömungsrichtung von einer Horizontalen bzw. Vertikalen abweicht.

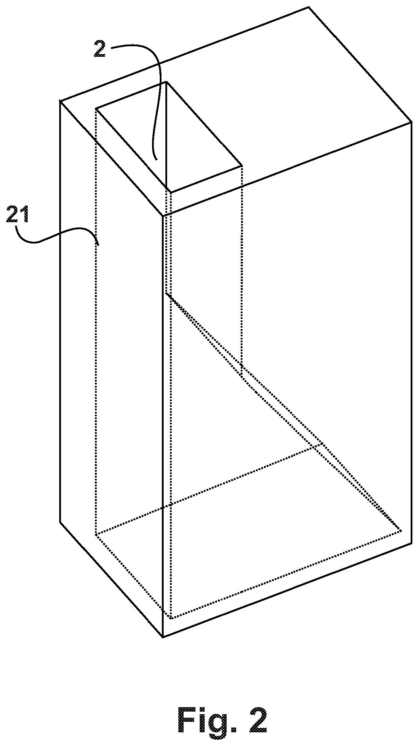

In Fig. 2 ist eine schematische Darstellung einer Ausführungsform eines Strömungskanals 2 gezeigt. Der Strömungskanal 2 kann alternativ auch einen Teil eines größeren Strömungssystems darstellen, wobei eine über den Strömungskanal 2 austretende Gasphase aus einer Umgebung des Strömungskanals 2 nachgespeist werden kann.

Fig. 3a zeigt eine schematische Darstellung einer Ausführungsform eines Heizelementes 7, wobei auf einem Substrat 12 eine Vertiefung 8 eingeätzt ist. In etwa zentral über der Vertiefung 8 ist eine Heizplatte 9 angeordnet. Die Vertiefung 8 kann beispielsweise vollständig durch das Substrat 12 reichen, wonach eine Partikelsensoranordnung 4 bzw. ein Heizelement 3 wie diese in Fig. 1b gezeigt sind, bereitgestellt sein kann. Eine Heizplatte 9 kann beispielsweise als Heizwiderstand ausgebildet sein. Es kann beispielsweise elektrischer Strom durch die Heizplatte 9 geleitet werden. Darüber hinaus kann ein Widerstand der Heizplatte 9 gemessen werden. Die in Fig. 3a gezeigte Heizplatte 9 ist quadratisch ausgebildet, es können allerdings auch andere Formen, z.B. rechteckig, mehreckig oder auch rund bzw. oval vorgesehen sein. Die Heizplatten 9 einer Heizeinrichtung 3 können als Mikroheizplatten ausgebildet sein und eine Seitenlänge von weniger als 500 µm, insbesondere etwa 5 µm bis 100 µm, aufweisen. Eine Dicke einer solchen Heizplatte 9 kann dabei weniger als 50 µm, insbesondere etwa 0,5 µm bis 10 µm betragen. Des Weiteren ist eine solche Heizplatte 9 mit Zuleitungsarmen 10 verbunden. Die Zuleitungsarme 10 können beispielsweise eine Länge von mehr als 5 µm, insbesondere 10 µm bis 300 µm und eine Breite von weniger als 100 µm, insbesondere 5 µm bis 50 µm, aufweisen. Eine Dicke der Zuleitungsarme 10 kann dabei weniger als 50 µm, insbesondere etwa 0,5 bis 10 µm betragen. Die Heizplatten 9 einer Heizeinrichtung 3 können jeweils unterschiedliche Größen aufweisen, das heißt, nicht alle Heizplatten 9 einer Heizeinrichtung 3 müssen gleich groß sein. Dasselbe gilt für Heizplatten 9 einer Partikelsensoranordnung 4. Darüber hinaus können Heizplatten 9 der Partikelsensoranordnung 4 deutlich kleiner als Heizplatten 9 der Heizeinrichtung 3, beispielsweise als Nanoheizelemente, wie etwa als Nanodrähte, ausgebildet sein, wobei elektrischer Strom durch diese Nanoheizelemente geleitet und optional ein elektrischer Widerstand gemessen werden kann. Heizplatten 9 können zumindest teilweise aus einem Halbleitermaterial, wie Silicium, einem Metalloxid, beispielsweise Zinkoxid, Kupferoxid oder Wolframoxid und/oder aus einem Metall, wie Platin, ausgebildet sein. Die Temperatursensoren können in derselben Größenordnung wie die Heizplatten 9 oder Zuleitungsarme 10 ausgebildet sein.

Alternativ können, wie in Fig. 3b gezeigt, auch nur zwei Zuleitungsarme 10 zur Heizplatte 9 vorgesehen sein. Zwei Zuleitungsarme 10 können wie in Fig. 3b einen Winkel von 180° einschließen. Natürlich können zwei Zuleitungsarme 10 auch einen anderen Winkel einschließen, wie beispielsweise einen Winkel von etwa 90°. Es ist auch denkbar, dass eine beliebige Anzahl an Zuleitungsarmen 10 vorgesehen ist.

Alternativ dazu kann eine Abmessung der Heizplatte 9 dieselbe wie jene der Zuleitungsarme 10 sein. Dadurch ergibt sich ein durchgängiger Balken 11. Ein solcher Balken **11** ist in Fig. 3c dargestellt. Selbstverständlich können auch mehrere solcher Balken **11** vorgesehen sein. Mehrere Balken **11** sind bevorzugt parallel zueinander angeordnet. Derartige Balken **11** können in der Bemaßung, also in Breite, Länge und Dicke unterschiedlich, insbesondere aber wie die Zuleitungsarme 10 ausgebildet sein. Besonders bevorzugt können Balken **11** als Nanodraht, mit einer Breite und/oder Dicke im Submikrometerbereich, insbesondere zwischen 10 nm und 500 nm, ausgebildet sein. Nanodrähte können beispielsweise über einen Transferprozess auf das Substrat 12 bzw. auf die Heizplatte 9 übertragen werden, beispielsweise durch Abscheidung oder Oxidation. Es kann auch vorgesehen sein, dass die Heizplatte 9 Elektroden aufweist, wobei beispielsweise ein Nanodraht zwischen jeweils zwei Elektroden angeordnet sein kann. Dadurch kann beispielsweise ein elektrischer Widerstand zwischen den Elektroden und damit beispielsweise ein Temperatureffekt gemessen werden. Die Nanodrähte sind bevorzugt zumindest teilweise aus Metalloxiden, beispielsweise aus Zinkoxid ausgebildet.

Alternativ zu den in Fig. 3a bis c gezeigten geradlinigen Zuleitungsarmen 10 und/oder Balken 11 können Zuleitungsarme 10 und/oder Balken 11 auch beliebig, beispielsweise gekrümmt und/oder im Zickzack verlaufen.

Fig. 3d zeigt ein Heizelement 7 in querschnittlicher Darstellung, wobei eine Vertiefung 8 in das Substrat 12 geätzt und darüber ein durchgängiger Balken 11 angeordnet ist.

Heizelemente 7, wie diese in Fig. 3a bis d gezeigt sind, können bei einer Partikelsensoranordnung 4 und/oder bei einer Heizeinrichtung 3 vorgesehen sein.

Bei der Heizeinrichtung 3 werden Heizelemente 7 auf konstanter Temperatur, vorzugsweise auf 300 °C gehalten, um beispielsweise mittels thermischer Konvektion die Gasphase durch den Strömungskanal 2 zu führen und/oder um einen Temperaturgradienten zu erzeugen. Hierfür kann die Heizeinrichtung 3 beispielsweise mit mehr als 1 mW, vorzugsweise 5 mW bis 20 mW, insbesondere mit etwa 10 mW betrieben werden, wobei eine Leistung derart angepasst und im Verlauf einer Messung justiert wird, um eine gewünschte Temperatur konstant zu halten. Die Heizelemente 7 können gleichmäßig, beispielsweise mit Gleichstrom, oder gepulst betrieben werden.

Bei einem gleichmäßigen Betrieb der Partikelsensoranordnung 4, werden Heizelemente 7 mit einer konstanten Leistung, beispielsweise mit 1 mW oder mehr betrieben und auf eine bestimmte Temperatur gebracht, wobei eine Leistung derart angepasst wird, um eine gewünschte Messtemperatur, beispielsweise 100 °C, zu erreichen. Im Verlauf der Messung wird z.B. die Leistung konstant gehalten. Eine Änderung der Temperatur kann mittels Temperatursensoren erfasst werden. Aus der Änderung der Temperatur kann in der Folge die Partikelkonzentration ermittelt werden.

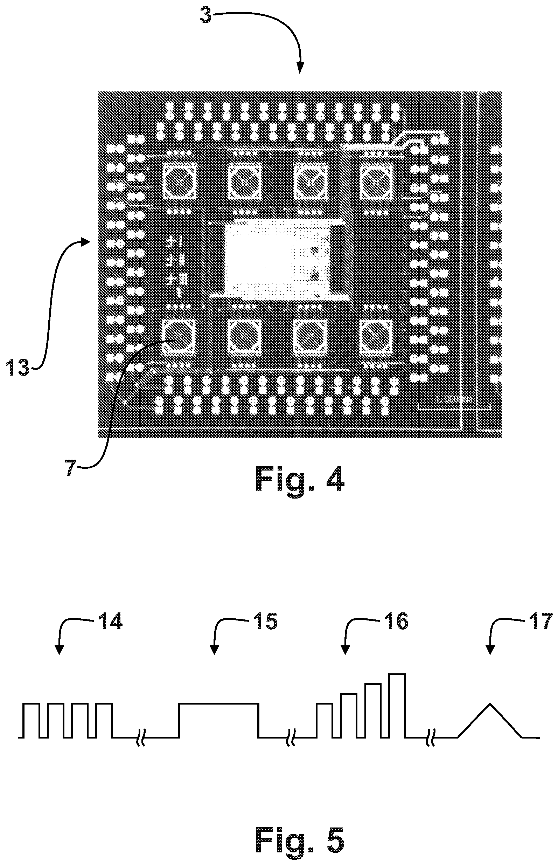

Fig. 5 zeigt mögliche Modi bei einem Betrieb der Heizelemente 7. Soll beispielsweise die Leistung über den Verlauf der Messung konstant gehalten werden, so kann dies, wie im Abschnitt 14 oder 15 dargestellt ist, pulsiert oder kontinuierlich erfolgen. Soll die Leistung über den Verlauf der Messung verändert werden, so kann dies, wie im Abschnitt 16 dargestellt ist, ebenfalls pulsiert erfolgen, wobei hierbei jeweils für eine bestimmte Zeit die Temperatur konstant gehalten wird. Alternativ dazu, kann eine Änderung der Leistung über den Verlauf der Messung kontinuierlich erfolgen, wie im Abschnitt 17 gezeigt ist. Die jeweiligen Abschnitte können beliebig lang und während und/oder zwischen verschiedenen Messungen beliebig kombiniert sein. Einzelne Pulse können ebenfalls beliebig lang sein. Darüber hinaus kann eine Pause zwischen jeweils zwei Pulsen beliebig lang und insbesondere auch weggelassen sein, wodurch eine stufenförmige Änderung der Leistung erfolgt. Bei einem Betrieb mit änderbarer Temperatur bzw. bei einem Betrieb mit verschiedenen Temperaturzyklen, kann beispielsweise auch ein Einfluss der Umgebung, wie beispielsweise der Einfluss einer Feuchtigkeit der Gasphase oder eine unterschiedliche Zusammensetzung der Gasphase ermittelt werden, wodurch die Messung der Partikelkonzentration korrigiert werden kann. Hierdurch kann beispielsweise eine Präzision der Messung erhöht werden. Eine Änderung der Leistung ist nicht auf die in Fig. 5 gezeigten Modi beschränkt, sondern kann auch einer anderen Form, wie beispielsweise einer Sägezahn-Form, folgen.

Bei einem gepulsten Betrieb der Partikelsensoranordnung 4 werden die Heizelemente 7 schnell, beispielsweise innerhalb von 20 ms, aufgeheizt, auf beispielsweise 200 °C. Nach einer vorbestimmten Zeit, typischerweise nach ein paar Sekunden, werden die Heizelemente 7 wieder abgeschaltet. Eine Aufheizzeit und eine Abkühlzeit hängen jeweils von der Wärmeabgabe an die Umgebung und also von der Partikelkonzentration ab. Deshalb kann aus einer Steigung und einer Form von Aufheizkurven und/oder Abkühlkurven die Partikelkonzentration ermittelt werden.

In einer anderen Ausführungsform können bei der Partikelsensoranordnung 4 Heizelemente 7 mit einem als Nanodraht ausgebildeten Balken 11 vorgesehen sein. Eine Ermittlung der Partikelkonzentration kann hierbei ebenfalls über eine Änderung der Temperatur erfolgen. Alternativ dazu kann der Nanodraht durch auftreffende Partikel in Schwingung versetzt werden. Dabei kann die Partikelkonzentration unter Ausnützung eines piezoelektrischen Effektes bestimmt werden.

Zur Reinigung können Heizelemente 7 der Partikelsensoranordnung 4 auf eine konstante und im Vergleich zu einem Messbetrieb erhöhte Temperatur, beispielsweise auf 300 °C gebracht werden. Hierfür können Heizelemente 7 wie bei der Heizeinrichtung 3 betrieben werden.

Fig. 4 zeigt eine Fotografie eines Chips 13, mit einem CMOS-integrierten Array mit acht Heizelementen 7. Ein derartiger Chip 13 kann beispielsweise eine Seitenlänge von 5 mm aufweisen.

In einer Ausführungsform kann beispielsweise auch eine Lernphase bzw. eine Kalibrierung der Vorrichtung 1 vorgesehen sein, um eine Präzision der Messung zu erhöhen. Um eine Differenzmessung zu realisieren, können auch mehrere Vorrichtungen 1, beispielsweise auf einer Multisensorplatte, vorgesehen sein.

## Patentansprüche

1. Vorrichtung (1) zur Messung von Partikelkonzentrationen in einer Gasphase, wobei ein Strömungskanal (2) vorgesehen ist, durch den die Gasphase führbar ist, und wobei zumindest eine Partikelsensoranordnung (4) vorgesehen ist, die am und/oder im Strömungskanal (2) positioniert ist, wobei die Partikelsensoranordnung (4) zumindest einen Sensor aufweist, der zur Messung einer durch den Strömungskanal (2) strömenden Gasphase positioniert ist, **dadurch gekennzeichnet, dass** eine Heizeinrichtung (3), die am/oder im Strömungskanal (2) positioniert ist, zur Lenkung der Partikel auf die Partikelsensoranordnung (4) vorgesehen ist und der zumindest eine Sensor der zumindest einen Partikelsensoranordnung (4) als Heizelement (7) mit zumindest einem Temperatursensor ausgebildet ist und eine Steuerungseinheit zur Steuerung der Heizelemente (7) vorgesehen ist, sodass die Heizelemente (7) der Partikelsensoranordnung (4) mit zumindest zeitweise konstanter Leistung betrieben und/oder auf einer bestimmten Temperatur gehalten werden können und eine Änderung einer Temperatur der Heizelemente (7) messbar und/oder die Temperatur der Heizelemente (7) konstant haltbar ist, wobei die Vorrichtung (1) eingerichtet ist, um bei zumindest zeitweise konstanter Leistung durch Temperaturänderung und bei konstanter Temperatur durch eine benötigte Heizleistung eine Partikelkonzentration zu ermitteln.

2. Vorrichtung (1) nach Anspruch 1, **dadurch gekennzeichnet, dass** Sensoren von zumindest einer Partikelsensoranordnung (4) jeweils zumindest einen Nanodraht aufweisen.

3. Vorrichtung (1) nach Anspruch 1 oder 2, **dadurch gekennzeichnet, dass** Sensoren der Partikelsensoranordnung (4) als Array, bevorzugt als lineares Array angeordnet sind, wobei die Sensoren vorzugsweise auf einem Chip (13) angeordnet sind.

4. Vorrichtung (1) nach einem der Ansprüche 1 bis 3, **dadurch gekennzeichnet, dass** zumindest ein Fluidbeschleunigungsmittel vorgesehen ist.

5. Vorrichtung (1) nach Anspruch 4, **dadurch gekennzeichnet, dass** das zumindest eine Fluidbeschleunigungsmittel als Heizeinrichtung (3) ausgebildet ist, wobei die Heizeinrichtung (3) zumindest ein Heizelement (7) und vorzugsweise einen Temperatursensor aufweist, wobei das zumindest eine Heizelement (7) vorzugsweise auf einem Chip (13) angeordnet ist.

6. Vorrichtung (1) nach einem der Ansprüche 1 bis 5, **dadurch gekennzeichnet, dass** zumindest eine Ablenkeinrichtung vorgesehen ist, wobei zumindest eine Ablenkeinrichtung im Bereich des Strömungskanals (2), besonders bevorzugt im und/oder am Strömungskanal (2) positioniert ist.

7. Vorrichtung (1) nach Anspruch 6, **dadurch gekennzeichnet, dass** zumindest eine Ablenkeinrichtung zumindest der Partikelsensoranordnung (4) gegenüberliegend positioniert ist.

8. Vorrichtung (1) nach einem der Ansprüche 1 bis 7, **dadurch gekennzeichnet, dass** eine erste Öffnung (5) des Strömungskanals (2) eine zumindest gleich große, insbesondere größere Querschnittsfläche aufweist als eine zweite Öffnung (6).

9. Vorrichtung (1) nach einem der Ansprüche 1 bis 8, **dadurch gekennzeichnet, dass** die zumindest eine Partikelsensoranordnung (4) zumindest teilweise eine Beschichtung, beispielsweise eine Antihaftbeschichtung, aufweist.

10. Verwendung einer Vorrichtung (1) nach einem der Ansprüche 1 bis 9 zur Messung von Partikelkonzentrationen in einer Gasphase.

11. Verfahren zur Messung von Partikelkonzentrationen in einer Gasphase mit einer Vorrichtung (1) nach einem der Ansprüche 1 bis 9, wobei die Partikel tragende Gasphase durch den Strömungskanal (2) geführt wird, wobei die Partikel in der Gasphase, zumindest teilweise, insbesondere gezielt auf zumindest die Partikelsensoranordnung (4) mit dem zumindest einen Sensor geführt werden, **dadurch gekennzeichnet, dass** mit einer als Heizeinrichtung (3) ausgebildeten Ablenkeinrichtung die Partikel in der Gasphase mittels Thermophorese auf die Partikelsensoranordnung (4) abgelenkt werden, die Heizelemente (7) der Partikelsensoranordnung (4) mit zumindest zeitweise konstanter Leistung beheizt oder geheizt werden und eine Änderung von zumindest einer Temperatur mittels des zumindest einen Sensors gemessen wird oder die Temperatur des Heizelementes (7) konstant gehalten und die benötigte Heizleistung gemessen wird, wobei aus der Änderung der Temperatur oder der benötigten Heizleistung in der Folge eine Partikelkonzentration ermittelt wird.

12. Verfahren nach Anspruch 11, **dadurch gekennzeichnet, dass** der zumindest eine Sensor der zumindest einen Partikelsensoranordnung (4) auf eine geringere Temperatur als 200 °C, insbesondere auf eine Temperatur zwischen 50 °C und 150°C, besonders bevorzugt auf etwa 100 °C erwärmt werden.

13. Verfahren nach einem der Ansprüche 11 oder 12, **dadurch gekennzeichnet, dass** zumindest eine Heizeinrichtung (3) auf eine höhere Temperatur als die zumindest eine Partikelsensoranordnung (4), beispielsweise auf zumindest 200 °C, insbesondere auf eine Temperatur im Bereich von 230 °C bis 400 °C, vorzugsweise auf eine Temperatur im Bereich von 250 °C bis 350 °C, besonders bevorzugt auf etwa 300 °C gebracht wird.

14. Verfahren nach einem der Ansprüche 11 bis 13, **dadurch gekennzeichnet, dass** Signale einer Mehrzahl von Sensoren getrennt voneinander ausgelesen werden.

15. Verfahren nach einem der Ansprüche 11 bis 14, **dadurch gekennzeichnet, dass** zur Reinigung der Partikelsensoranordnung (4) Heizelemente (7) der Partikelsensoranordnung (4) auf zumindest 200 °C, insbesondere auf eine Temperatur im Bereich von 250 °C bis 400 °C, besonders bevorzugt auf 300 °C gebracht werden.

## Claims

1. A device (1) for measuring particle concentrations in a gas phase, wherein a flow channel (2) is provided through which the gas phase can be conveyed, and wherein at least one particle sensor arrangement (4) is provided which is positioned at and/or in the flow channel (2), the particle sensor arrangement (4) comprising at least one sensor which is positioned for measuring a gas phase flowing through the flow channel (2), **characterized in that** a heating device (3) which is positioned at and/or in the flow channel (2) is provided for directing particles onto the particle sensor arrangement (4) and the at least one sensor of the at least one particle sensor arrangement (4) is configured as a heating element (7) having at least one temperature sensor and a control unit is provided for controlling the heating elements (7), so that the heating elements (7) of the particle sensor arrangement (4) can be operated at at least intermittently constant power and/or can be maintained at a predetermined temperature and a change in a temperature of the heating elements (7) is measurable and/or the temperature of the heating elements (7) can be kept constant, wherein the device (1) is configured to determine a particle concentration, at least intermittently at constant power, by a change in temperature and, at constant temperature, by a required heating power.

2. The device (1) according to claim 1, **characterized in that** sensors of at least one particle sensor arrangement (4) each comprise at least one nanowire.

3. The device (1) according to claim 1 or 2, **characterized in that** sensors of the particle sensor arrangement (4) are arranged as an array, preferably as a linear array, wherein the sensors are preferably arranged on a chip (13).

4. The device (1) according to any one of claims 1 to 3, **characterized in that** at least one fluid acceleration means is provided.

5. The device (1) according to claim 4, **characterized in that** the at least one fluid acceleration means is configured as a heating device (3), wherein the heating device (3) comprises at least one heating element (7) and preferably a temperature sensor, wherein the at least one heating element (7) is preferably arranged on a chip (13).

6. The device (1) according to any one of claims 1 to 5, **characterized in that** at least one deflection device is provided, wherein at least one deflection device is positioned in the region of the flow channel (2), particularly preferably in and/or at the flow channel (2).

7. The device (1) according to claim 6, **characterized in that** at least one deflection device is positioned at least opposite the particle sensor arrangement (4).

8. The device (1) according to any one of claims 1 to 7, **characterized in that** a first opening (5) of the flow channel (2) has a cross-sectional area which is at least as large as, in particular larger than, that of a second opening (6).

9. The device (1) according to any one of claims 1 to 8, **characterized in that** the at least one particle sensor arrangement (4) has, at least in part, a coating, for example a non-stick coating.

10. Use of a device (1) according to any one of claims 1 to 9 for measuring particle concentrations in a gas phase.

11. A method for measuring particle concentrations in a gas phase using a device (1) according to any one of claims 1 to 9, wherein the particle-laden gas phase is conveyed through the flow channel (2), wherein the particles in the gas phase are, at least in part, in particular selectively, guided onto at least the particle sensor arrangement (4) having the at least one sensor, **characterized in that** the particles in the gas phase are deflected onto the particle sensor arrangement (4) by thermophoresis by means of a deflection device configured as a heating device (3), the heating elements (7) of the particle sensor arrangement (4) are heated at at least intermittently constant power and a change in at least one temperature is measured by means of the at least one sensor, or the temperature of the heating element (7) is kept constant and the required heating power is measured, wherein a particle concentration is subsequently determined from the change in temperature or from the required heating power.

12. The method according to claim 11, **characterized in that** the at least one sensor of the at least one particle sensor arrangement (4) is heated to a temperature lower than 200 °C, in particular to a temperature between 50 °C and 150 °C, particularly preferably to approximately 100 °C.

13. The method according to any one of claims 11 or 12, **characterized in that** at least one heating device (3) is brought to a temperature higher than that of the at least one particle sensor arrangement (4), for example to at least 200 °C, in particular to a temperature in the range from 230 °C to 400 °C, preferably to a temperature in the range from 250 °C to 350 °C, particularly preferably to approximately 300 °C.

14. The method according to any one of claims 11 to 13, **characterized in that** signals of a plurality of sensors are read out separately from one another.

15. The method according to any one of claims 11 to 14, **characterized in that**, for cleaning the particle sensor arrangement (4), heating elements (7) of the particle sensor arrangement (4) are brought to at least 200 °C, in particular to a temperature in the range from 250 °C to 400 °C, particularly preferably to 300 °C.

## Revendications

1. Dispositif (1), destiné à mesurer des concentrations de particules dans une phase gazeuse, une canalisation d'écoulement (2) étant prévue, à travers laquelle la phase gazeuse peut être conduite et au moins une configuration de capteurs de particules (4) étant prévue, qui est positionnée sur et / ou dans la canalisation d'écoulement (2), la configuration de capteurs de particules (4) comportant au moins un capteur qui est positionné pour mesurer une phase gazeuse s'écoulant à travers la canalisation d'écoulement (2), **caractérisé en ce qu'**il est prévu un système de chauffage (3), qui est positionné dans ou sur la canalisation d'écoulement (2), pour diriger les particules sur la configuration de capteurs de particules (4) et **en ce que** l'au moins un capteur de l'au moins un ensemble de capteurs de particules (4) est conçu sous la forme d'un élément chauffant (7), doté d'au moins un capteur de température et **en ce qu'**il est prévu une unité de commande, destinée à commander les éléments chauffants (7), de telle sorte que les éléments chauffants (7) de la configuration de capteurs de particules (4) fonctionnent à une puissance au moins temporairement constante et / ou puissent être maintenus à une température déterminée et qu'une température des éléments chauffants (7) soit mesurable et / ou que la température des éléments chauffants (7) puisse être maintenue à un niveau constant, le dispositif (1) étant conçu pour, à puissance au moins temporairement constante, déterminer par variation de température et à une température constante, par une puissance de chauffe nécessaire une concentration de particules.

2. Dispositif (1) selon la revendication 1, **caractérisé en ce que** des capteurs d'au moins une configuration de capteurs de particules (4) comportent chacun au moins un nanofil.

3. Dispositif (1) selon la revendication 1 ou 2, **caractérisé en ce que** des capteurs de la configuration de capteurs de particules (4) sont placés sous la forme d'un réseau, de préférence d'un réseau linéaire, les capteurs étant placés de préférence sur une puce (13).

4. Dispositif (1) selon l'une quelconque des revendications 1 à 3, **caractérisé en ce qu'**il est prévu au moins un moyen accélérateur de fluide.

5. Dispositif (1) selon la revendication 4, **caractérisé en ce que** l'au moins un moyen accélérateur de fluide est conçu sous la forme d'un système de chauffage (3), le système de chauffage (3) comportant au moins un élément chauffant (7) et de préférence un capteur de température, l'au moins un élément chauffant (7) étant placé de préférence sur une puce (13).

6. Dispositif (1) selon l'une quelconque des revendications 1 à 5, **caractérisé en ce qu'**il est prévu au moins un système de déviation, au moins un système de déviation étant positionné dans la zone de la canalisation d'écoulement (2), de manière particulièrement préférentielle, dans et / ou sur la canalisation d'écoulement (2).

7. Dispositif (1) selon la revendication 6, **caractérisé en ce qu'**au moins un système de déviation est positionné au moins au vis-à-vis de la configuration de capteurs de particules (4).

8. Dispositif (1) selon l'une quelconque des revendications 1 à 7, **caractérisé en ce qu'**un premier orifice (5) de la canalisation d'écoulement (2) comporte une surface de section transversale au moins de même taille, notamment plus grande que celle d'un deuxième orifice (6).

9. Dispositif (1) selon l'une quelconque des revendications 1 à 8, **caractérisé en ce que** l'au moins une configuration de capteurs de particules (4) comporte au moins par endroits un revêtement, par exemple un revêtement antiadhérent.

10. Utilisation d'un dispositif (1) selon l'une quelconque des revendications 1 à 9 pour mesurer des concentrations de particules dans une phase gazeuse.

11. Procédé, destiné à mesurer des concentrations de particules dans une phase gazeuse, à l'aide d'un dispositif (1) selon l'une quelconque des revendications 1 à 9, la phase gazeuse portant des particules étant conduite à travers la canalisation d'écoulement (2), les particules dans la phase gazeuse étant conduites au moins en partie, notamment de manière ciblée sur au moins la configuration de capteurs de particules (4), dotée de l'au moins un capteur, **caractérisé en ce qu'**à l'aide d'un système de déviation conçu sous la forme d'un système de chauffage (3), les particules dans la phase gazeuse sont déviées par thermophorèse sur la configuration de capteurs de particules (4), les éléments chauffants (7) de la configuration de capteurs de particules (4) sont chauffés ou mis en chauffe à une puissance de chauffe au moins temporairement constante et une variation d'au moins une température est mesurée au moyen de l'au moins un capteur ou la température de l'élément chauffant (7) est maintenue à un niveau constant et la puissance de chauffe nécessaire est mesurée, à partir d'une variation de la température ou de la puissance de chauffe nécessaire, une concentration de particules étant déterminée.

12. Procédé selon la revendication 11, **caractérisé en ce que** l'au moins un capteur de l'au moins une configuration de capteurs de particules (4) est chauffé à une température inférieure à 200 °C, notamment à une température comprise entre 50 °C et 150 °C, de manière particulièrement préférentielle, à environ 100 °C.

13. Procédé selon l'une quelconque des revendications 11 ou 12, **caractérisé en ce qu'**au moins un système de chauffage (3) est amené à une température plus élevée que celle de l'au moins une configuration de capteurs de particules (4), par exemple à au moins 200 °C, notamment à une température de l'ordre de 230 °C à 400 °C, de préférence, à une température de l'ordre de 250 °C à 350 °C, de manière particulièrement préférentielle, à environ 300 °C.

14. Procédé selon l'une quelconque des revendications 11 à 13, **caractérisé en ce que** des signaux d'une pluralité de capteurs sont lus séparément les uns des autres.

15. Procédé selon l'une quelconque des revendications 11 à 14, **caractérisé en ce que** pour nettoyer la configuration de capteurs de particules (4), des éléments chauffants (7) de la configuration de capteurs de particules (4) sont amenés à au moins 200 °C, notamment à une température de l'ordre de 250 °C à 400 °C, de manière particulièrement préférentielle, à 300 °C.
